# EUROPEAN PATENT APPLICATION

(11) **EP 3 770 577 A1**
(43) Date of publication of application: **27.01.2021**
(21) Application number: 19187967.5
(22) Date of filing: 23.07.2019
(51) Int. Cl.: G01M 13/02, G01K 13/08, G01D 11/24

(54) **A DEVICE FOR DETECTING THE FAILURE IN A DRIVETRAIN SYSTEM**

(71) Applicant: ABB Schweiz AG, 5400 Baden (CH)
(72) Inventor: Lipnicki, Piotr, 20-861 Lublin (PL); Porebska, Renata, 32-600 Oswiecim (PL); Krol, Julita, 32-420 Gdow (PL); Rydygier, Przemyslaw, 30-718 Krakow (PL); Wysocki, Wojciech, 31-271 Krakow (PL)
(74) Representative: Wroblewski, Marcin Jan

(57) **Abstract**

The subject of the invention is a device (1) for detecting the failure in a drivetrain system having at least one electrical device equipped with a rotating mechanical shaft (2). The device has a form of a protective sleeve cover (1) placed on the shaft (2) of the electric device (3) in a stationary way. The cover sleeve (1) has a cylindrical housing (5) on which a flexible electronic system (6) is placed. The electronic system (6) is connected with at least one of a measuring sensor (7, 8, 9, 10) incorporated into the housing (5) for measuring an electrical and/or physical signals generated by the rotating shaft (2). The electronic system (6) is equipped with a microprocessor (11) embedded in the housing (5) or placed radially on the housing (5) which is adapted for processing the measured signals by sensor (7, 8, 9, 10) and for detecting the failure in the drivetrain system on the basis of the measured and processed signals.

## Description

### Field of the invention

The subject of the invention is a device for detecting the failure in a drivetrain system having at least one electrical device equipped with a rotating mechanical shaft.

### Background of the invention

Mechanical shafts are one of the most important elements of today's industry in a drivetrain system. One can find them and observe in many different industrial segments - wherever anything is rotating. To be able to detect failures on different shaft connected in the same drivetrain is a desired feature from the operator point of view. Demands for greater efficiency and reliability of industrial systems driving critical electrical machinery in industry is a big new chalenge in nowadays. Having a possibility to perform fast and safe monitoring, diagnostics and prediction of a rotating shaft is a crucial thing. To be able to detect the temperature, vibrations, electromagnetic field etc. allows for boosting up the productivity and performance. It can reduce the downtime and allow for better assets utilization.

### Summary of the invention

The essence of the present invention is that the invented device has a form of a protective sleeve cover placed on the rotating mechanical shaft of the electric device in a stationary way. The cover sleeve has a cylindrical housing encircling the radial surface of the shaft and on the housing a flexible electronic system is placed. The electronic system is connected with at least one of a measuring sensor incorporated into the housing for measuring an electrical and/or physical signals of the rotating shaft. The electronic system is equipped with a microprocessor embedded in the housing of the sleeve or placed radially on the housing. The microprocessor is adapted for processing the measured signals and for detecting the failure in the drivetrain system on the basis of the measured and processed signals.

Preferable the microprocessor comprises a converter module for converting the measured signals from the analog signal output into a digital signal output which can be processed next by other modules, a processing module for processing the measured data according to the algorithm implemented in the microprocessor by the user, a memory module for recording and remembering the necessary data and a communication module for communicating the internal an the external devices connected to the drivetrain system.

Preferably the microprocessor is connected with an energy module for powering the measuring sensors and the microprocessor.

Preferably the energy module is a flexible battery or a bank of flexible batteries radially placed on the housing of the cover sleeve.

Preferably the microprocessor is connected with a diodes indicator for visualization the state of the device under the examination which indicator is placed on the housing of the cover sleeve.

Preferably the microprocessor is incorporated to the sleeve cover by printing, gluing, injection molding means.

Preferably the sleeve cover is made from any known kind of flexible material based on polymers, a specially from polyimide, polyester, polyethylene, silicon, rubber.

Preferably the communication module is adapted for transferring dedicated datasets by means of wireless communication protocol as Bluetooth, Bluetooth Low Energy, Thread, WiFi.

Preferably one of the measuring sensor which is incorporated into the housing the cover sleeve is a sensor for measuring temperature signals of the rotating shaft.

Preferably one of the measuring sensor which is incorporated into the housing the cover sleeve is a sensor for measuring a magnetic field around the drive or other examined electrical device.

Preferably one of the measuring sensor which is incorporated into the housing the cover sleeve is a sensor for measuring the vibration signals of the rotating shaft.

Preferably one of the measuring sensor which is incorporated into the housing the cover sleeve is a sensor measuring tension signals of the rotating shaft.

### Advantages of the invention

Placing the cover sleeve with sensors on the shaft od the examined electrical device will allow for quick and accurate measurement of the drivetrain operation parameters. The invention allows for indepth indication for upcoming mechanical problems like a misaligment, a torsional oscialtion, an eccentricity of all kind of devices which contain shaft. Making the cover sleeve of a flexible material and its close adherence to the element of the rotating machine allows for precise and quick diagnostics of device. The flexible cover sleeve has a simple construction and can be applied in motors, gears, load machine - pumps, compressor etc.

### Description of the drawings

A more comprehensive description of the invention in an exemplary embodiment is presented in the drawings, where:

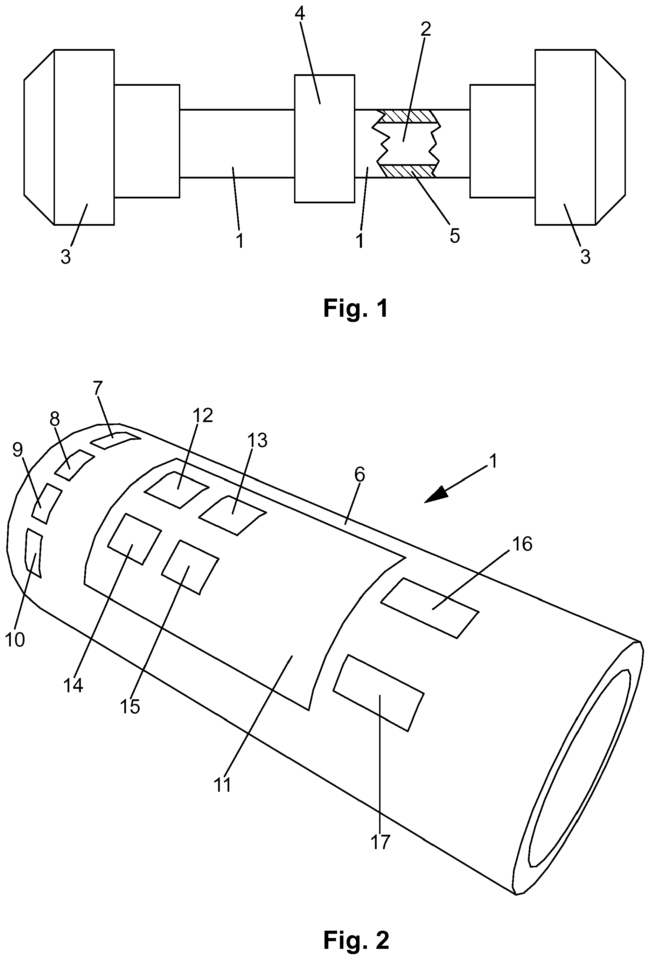

Fig. 1 shows a schematic view of a drivetrain system,
Fig. 2 shows a device for detecting the failure in the drivetrain system,

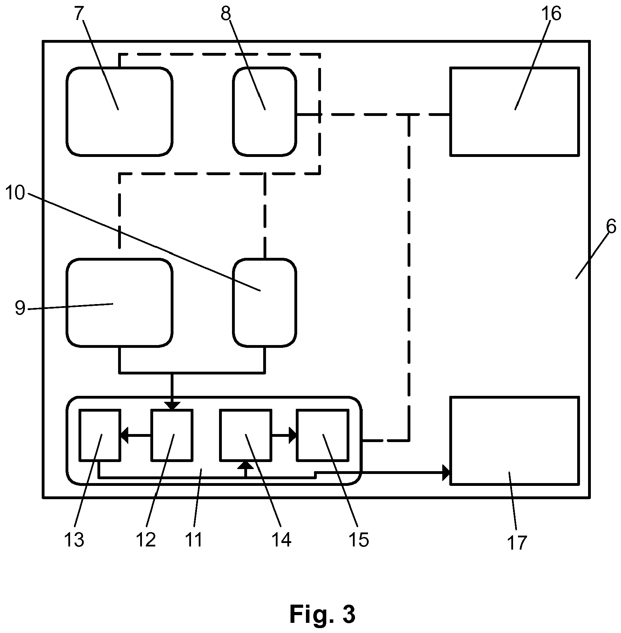

Fig. 3 shows a schematic view of the electronic system of the device from fig. 2.

### Detailed description of the invention

A device according to the invention has a form of a cover sleeve 1 which is placed axially on a rotating shaft 2 of the drive 3 connected with the gear box 4 for join the other electrical machine. The simplest form of the cover sleeve is a cylinder which is fixed on the shaft 2. An installation of the cover sleeve 1 on the shaft can be done by any known method, e.g. pulling on the shaft, heat sealing etc. The cover sleeve 1 can be made from any known kind of flexible material based on polymers e.g. polyimide, polyester, polyethylene, silicon, rubber etc. The cover sleeve 1 has a cylindrical housing 5 encircling the radial surface of the shaft 2 and on the housing 5 a flexible electronic system 6 is placed. The electronic system 6 is connected with at least one kind of sensors for measuring an electrical and/or physical parameters of the rotating shaft 2. All sensors are placed on the surface of the cover sleeve 1 or they are embedded in the material of the housing 5. Each sensor comprises a single sensor or a set of sensors for measuring parameters of strictly determined physical quantity. In the exemplary embodiment there are four kinds of sensors, the first sensor 7 for measuring temperature signals of the rotating shaft 2, the second sensor 8 for measuring a magnetic field around the drive 3 or other examined electrical device, the third sensor 9 for measuring the vibration signals of the rotating shaft 2, the forth sensor 10 for measuring tension signals of the rotating shaft 2. Any other sensor can be connected to the housing 5, what is not presented in the drawing. Each of these sensors are connected with a microprocessor 11 having a converter module 12 for converting the measured signals from the analog signal output into a digital signal output which can be processed next by other modules of the microprocessor 11, a processing module 13 for processing the measured data according to the algorithm implemented in the microprocessor by the user, a memory module 14 for recording and remembering the necessary data, a communication module 15 for communicating the internal an the external devices, not presented in the drawings. The communication module 15 can transfer dedicated datasets by the means of wireless communication protocol of any known kind e.g. Bluetooth, Bluetooth Low Energy, Thread, WiFi etc. The electronic system 6 and its modules can be incorporated to the cover sleeve 1 by the means of the known methods, e.g. printing, gluing, injection molding. The system 6 is also equipped with an energy module 16 for powering the sensors 7, 8, 9, 10 and connected with the microprocessor 11. The energy module 16 is a flexible battery or a bank of flexible batteries radially placed on the housing 5. To the microprocessor 11 a diodes indicator 17 is connected. In a typical situation the processing module 13 may calculate some finger prints Key Performance Indicators (KPIs) based on the digitized data introduced earlier to the microprocessor 11. The processing module 13 may calculate a Root Mean Square from vibration signal. The processing module 13 may calculate a rate of change of the temperature compared with historical values stored internally in a memory module 14 or it can compare the intensity of the magnetic field against a pre-set threshold value introduced earlier by a user to the microprocessor 11. If the pre-set threshold value is exceeded the predefined value this can be visualized by switch on one of diodes from the diodes indicator 17. The KPIs may be calculated on a periodic basis e.g. once every hour, or only after being triggered by a signal from an external portable device e.g. a mobile phone, not presented in the drawing. The signal outputs generated in the processing module 13 are send to the memory module 14. The memory module 14 may store a history of past signal outputs from the processing module 13 allowing for trends to be generated or it may store only the last signal output, every time discarding the previous entries. The communication module 15 is fetching the data from memory module 14 in a regular way predefined by user, e.g. every fifteen minutes.

The example of a practical exploitation of the present invention is presented as a sequence of operations S1-S5.

### Operation S1 - Measuring sensor initial signals S_{T}, S_{M}, S_{V}, S_{TE}

In the first operation the following initial signals are measured: a temperature signals **S_{T},** which is measured by the first sensor 7; a magnetic field signals **S_{M}** which is measured by the second sensor 8, a vibration signals **S_{V}** which is measured by the third sensor 9, and a tension signals **S_{TE}** which is measured by the forth sensor 10. All measuring signals are sent to the microprocessor 11 for processing them first in the converter module 12 for converting an analog signals outputs into a digital signals outputs and next for the digital signals in the processing module 13. To the processing module 13 a user can provide some constant values as a sensitivity indicator Senlnd (Senlnd = i.e. 20%), a warning indicator Warlnd (Warlnd = i.e. 15%), an alarm indicator Alarlnd (Alarlnd = i.e. 30%).

### Operation S2 - Processing and storing the measurements

Next the digitalized initial signals S_{T}, S_{M}, S_{V}, S_{TE} are processed in order to obtain fingerprints F11.....Fnn of the measured signal. This is done by performing a spectral analysis of the signals S_{T}, S_{M}, S_{V}, S_{TE} by using a FFT (Fast Fourier Transform) process and from the characteristic frequencies of FFT(S_{T}, S_{M}, S_{V}, S_{TE}) signal amplitudes SigAMPfin(S_{T}, S_{M}, S_{V}, S_{TE}) of each fingerprint what is calculated in the known way, using the processing module 13. In addition statistical Key Performance Indicators K11(S_{T}, S_{M}, S_{V}, S_{TE}) .....Knn(S_{T}, S_{M}, S_{V}, S_{TE}) e.g. kurtosis, crest factor, RMS, skewness are calculated. Each of the fingerprints and KPI's is then being stored in the memory module 14 of the microprocessor 11.

### Operation S3 - Measuring sensor consecutive signals S_{T2}, S_{M2}, S_{V2}, S_{TE2}

In order to receive more signals for the processing the measurement from the first operation is repeated. Next the consecutive measured signals S_{T2}, S_{M2}, S_{V2}, S_{TE2} are preprocessed as in the operation S2. The results of these operation are the following: fingerprints F₂11.....F₂nn (n is a natural number) of the measured signal; from the characteristic frequencies of FFT₂(S_{T2}, S_{M2}, S_{V2}, S_{TE2}) signal amplitudes SigAMPfin₂(S_{T2}, S_{M2}, S_{V2}, S_{TE2}) of each fingerprint. In addition statistical Key Performance Indicators K₂11(S_{T2}, S_{M2}, S_{V2}, S_{TE2}) K₂nn(S_{T2}, S_{M2}, S_{V2}, S_{TE2}) e.g. kurtosis, crest factor, RMS, skewness are calculated.

### Operation S4 - Settlement the fault indicator F_{ind}

Having the values of signal consecutive amplitudes SigAMPfin₂(S_{T2}, S_{M2}, S_{V2}, S_{TE2}) and the initial signal amplitudes SigAMPfin(S_{T}, S_{M}, S_{V}, S_{TE}) it is possible to compare their values. Also it is possible to compare the statistical Key Perfomance Indicators K11(S_{T}, S_{M}, S_{V}, S_{TE}) .....Knn(S_{T}, S_{M}, S_{V}, S_{TE}) with the statistical Key Performance Indicators K₂11(S_{T2}, S_{M2}, S_{V2}, S_{TE2}) .....K₂nn(S_{T2}, S_{M2}, S_{V2}, S_{TE2}). The percentage difference between the values of signal consecutive amplitudes SigAMPfin₂(S_{T2}, S_{M2}, S_{V2}, S_{TE2}) and the value of the signal amplitudes SigAMPfin₂(S_{T2}, S_{M2}, S_{V2}, S_{TE2}) is the fault indicator F_{ind} for each pair of fingerprints F1, F11; F2, F22; .....Fn, Fnn. The percentage difference between the values of statistical Key Performance Indicators K₂11(S_{T2}, S_{M2}, S_{V2}, S_{TE2}) .....K₂nn(S_{T2}, S_{M2}, S_{V2}, S_{TE2}) and the value of the statistical Key Perfomance Indicators K11(S_{T}, S_{M}, S_{V}, S_{TE}) .....Knn(S_{T}, S_{M}, S_{V}, S_{TE}) is a fault indicator F_{ind2} for each pair of K11, K₂11; K22, K₂22 .... Knn, K₂nn.

### Operation S5 - Presenting the result of the invention

Comparing the value of the fault indicator F_{ind} for initial measured signals and the value of F_{ind2} for sequence measured signals with the values of the sensitive indicator Senlnd, the warning indicator Warlnd and the alarm indicator Alarlnd which were established in the first operation S1 is it possible to trigger the action of the diodes indicator 17 and the state of the drivetrain is visible for the operators. Also the information about the state of the drivetrain can be sent via a communication module 15 and by the means of wireless communication protocol of any known kind e.g. Bluetooth, Bluetooth Low Energy, Thread, WiFi etc to the operators.

## Claims

1. A device for detecting the failure in a drivetrain system wherein the drive system is equipped with at least one electric device (3) having a rotating mechanical shaft (2), **characterized in that** the device has a form of a protective sleeve cover (1) placed on the shaft (2) of the electric device (3) in a stationary way, wherein the cover sleeve (1) has a cylindrical housing (5) encircling the radial surface of the shaft (2) and on the housing (5) a flexible electronic system (6) is placed, which electronic system (6) is connected with at least one of a measuring sensor (7, 8, 9, 10) incorporated into the housing (5) for measuring an electrical and/or physical signals generated by the rotating shaft (2); the electronic system (6) is equipped with a microprocessor (11) embedded in the housing (5) or placed radially on the housing (5) and the microprocessor (11) is adapted for processing the measured signals by sensor (7, 8, 9, 10) and for detecting the failure in the drivetrain system on the basis of the measured and processed signals.

2. A device according to claim 1, **characterized in that** the microprocessor (11) comprises a converter module (12) for converting the measured signals from the analog signal output into a digital signal output which can be processed next by other modules of the microprocessor (11), a processing module (13) for processing the measured data according to the algorithm implemented in the microprocessor by the user, a memory module (14) for recording and remembering the necessary data and a communication module (15) for communicating the internal an the external devices connected to the drivetrain system.

3. A device according to claim 2, **characterized in that** the microprocessor (11) is connected with an energy module (16) for powering the sensors (7, 8, 9, 10) and the microprocessor (11).

4. A device according to claim 3, **characterized in that** the energy module (16) is a flexible battery or a bank of flexible batteries radially placed on the housing (5).

5. A device according to claim 2, **characterized in that** the microprocessor (11) is connected with a diodes indicator (17) for visualization the state of the device under the examination which indicator is placed on the housing (5).

6. A device according to any of the previous claims **characterized in that** the microprocessor (11) is incorporated to the sleeve cover (1) by printing, gluing, injection molding means.

7. A device according to any of the previous claims **characterized in that** the sleeve cover (1) is made from any known kind of flexible material based on polymers, a specially from polyimide, polyester, polyethylene, silicon, rubber.

8. A device according to any of the previous claims **characterized in that** the communication module (15) is adapted for transferring dedicated datasets by means of wireless communication protocol as Bluetooth, Bluetooth Low Energy, Thread, WiFi.

9. A device according to any of the previous claims **characterized in that** the measuring sensor (7) incorporated into the housing (5) is a sensor for measuring temperature signals of the rotating shaft (2).

10. A device according to any of the previous claims **characterized in that** the measuring sensor (8) incorporated into the housing (5) is a sensor for measuring a magnetic field around the drive (3) or other examined electrical device (4).

11. A device according to any of the previous claims **characterized in that** the measuring sensor (9) incorporated into the housing (5) is a sensor for measuring the vibration signals of the rotating shaft (2).

12. A device according to any of the previous claims **characterized in that** the measuring sensor (7) incorporated into the housing (5) is a sensor measuring tension signals of the rotating shaft (2).
